# EUROPEAN PATENT SPECIFICATION

(11) **EP 2 565 254 B1**
(45) Date of publication and mention of the grant of the patent: **05.11.2014**
(21) Application number: 10850506.6
(22) Date of filing: 30.04.2010
(51) Int. Cl.: C09K 11/87

(54) **BORATE BASED RED LIGHT EMITTING MATERIAL AND PREPARATION METHOD THEREOF**
ROTLICHTEMITTIERENDES MATERIAL AUF BORATBASIS UND HERSTELLUNGSVERFAHREN DAFÜR
MATÉRIAU LUMINESCENT ROUGE À BASE DE BORATE ET SON PROCÉDÉ DE PRÉPARATION

(43) Date of publication of application: 06.03.2013
(73) Proprietor: Ocean's King Lighting Science&Technology Co., Ltd., Guangdong 518054 (CN)
(72) Inventor: ZHOU, Mingjie, Shenzhen Guangdong 518054 (CN); LIU, Jun, Shenzhen Guangdong 518054 (CN); MA, Wenbo, Shenzhen Guangdong 518054 (CN)
(74) Representative: Johnson, Richard Alan
(86) International application number: PCT/CN2010/072391
(87) International publication number: WO 2011/134173

(56) References cited:
- CN-A- 101 074 374
- CN-A- 101 586 029
- US-A- 5 776 368
- US-A1- 2007 273 283
- CUIKUN LIN ET AL: "Monodisperse and Core-Shell-Structured SiO 2 @YBO 3 :Eu 3+ Spherical Particles: Synthesis and Characterization", INORGANIC CHEMISTRY, vol. 46, no. 7, 1 April 2007 (2007-04-01), pages 2674-2681, XP055084834, ISSN: 0020-1669, DOI: 10.1021/ic062318j
- WANG H ET AL: "Monodisperse spherical core-shell-structured phosphors obtained by functionalization of silica spheres with Y2O3:Eu3+ layers for field emission displays", APPLIED PHYSICS LETTERS, AIP, AMERICAN INSTITUTE OF PHYSICS, MELVILLE, NY, US, vol. 87, no. 18, 25 October 2005 (2005-10-25), pages 181907-181907, XP012076196, ISSN: 0003-6951, DOI: 10.1063/1.2123382
- YAN-HUI SUN ET AL: "Synthesis and characteristics of nano-size sandwich structure (Y,Gd)BO: Euphosphors", JOURNAL OF LUMINESCENCE, ELSEVIER BV NORTH-HOLLAND, NL, vol. 132, no. 3, 28 September 2011 (2011-09-28), pages 550-557, XP028345149, ISSN: 0022-2313, DOI: 10.1016/J.JLUMIN.2011.09.052 [retrieved on 2011-10-06]
- ASLAN KADIR ET AL.: 'Fluorescent Core-Shell Ag@Si02 Nanocomposites for Metal-Enhanced Fluorescence and Single Nanoparticle Sensing Platforms' J. AM. CHEM. SOC. 2007 vol. 129, 19 January 2007, pages 1524 - 1525, XP055069426

## Description

### FIELD OF THE INVENTION

The invention relates to light emitting material technology field. More particularly, the invention relates to borate based red light emitting material and preparation method thereof.

### BACKGROUND OF THE INVENTION

In recent years, with the PDP display technology development as well as intensive study of the mercury-free light source, the research and development of efficient, stable, red, green, and blue light emitting materials which have strong absorption of 172nm, have broad application prospects. At present, commercial light emitting materials are mainly red light emitting material Y₂O₃: Eu³⁺, (Y, Gd)BO₃:Eu³⁺, green light emitting material Zn₂SiO₄: Mn²⁺, BaAl₁₂O₁₉:Mn²⁺ and blue light emitting material Y₂SiO₅:Ce³⁺, LaPO₄:Tm³⁺, BaMgAl₁₀O₁₇:Eu²⁺. Herein, because of the high luminous efficiency of red light emitting material (Y, Gd)BO₃:Eu³⁺ under the excitation of vacuum ultra violet (VUV), red light emitting material (Y, Gd)BO₃:Eu³⁺ becomes the most common red composition light emitting material used in vacuum ultra violet excitation. Besides, researches show that the thickness of the light emitting material which can be penetrated through by VUV ray excitation is about 100 to 200nm, surface and valid excitation space play an important role in the light emission, so a good morphology such as spherical, spherical-like, uniform particles, small size (averaged particle size is 1 to 2 µm) and other advantages are required in the light emitting material excited by VUV. However, luminous performances of fluorescent powder have a close relationship with the preparation method thereof. For example, the preparation of (Y, Gd)BO₃:Eu³⁺ by using normal high temperature solid state method is a simple process, and suitable for industrial production, but, the reactions take long time, mix non-uniformly, and it takes certain amount of time for the ball milling. The luminous center in the matrix dispersed nonuniformly, affecting their luminous efficiency. Also, the particle size of prepared fluorescent powder is quite large, morphology is quite poor. In addition, impurities can be easily introduced and lattice defects can be caused during the ball milling process. Physical and chemical changes caused by the ball milling often lead to reduce luminance of Lin et al., Inorganic Chemistry, 2007, 46, 2674-2681 describes Y_{0.9}Eu_{0.1}BO₃ phosphor layers deposited on monodisperse SiO₂ particles. US5,776,368 describes a method for a single step firing synthesis of borate phosphors. US2007/0273283 describes a plasma display panel including a mixed fluorescent material, a green fluorescent material and a blue fluorescent material.

### STATEMENT OF THE INVENTION

In view of this, a borate based red light emitting material having the advantages of uniform particle size, structure stability, excellent luminous intensity and luminous efficiency is provided.

And, a preparation method having a simple process, low demand on equipment and no pollution, being easily controllable for the reaction, material morphology and particle size, and suitable for industrial production is provided.

The technical solution to solve the technical problem of the present invention is:

A borate based red light emitting material comprising a core and a shell covering said core, wherein said core is nanometer metal particle, and said shell is fluorescent powder having chemical formula of (Y_{1-x-y}EuₓGd_{y})BO₃, wherein 0< x≤0.3, 0≤y≤0.7.

And, a preparation method of borate based red light emitting material is provided, comprising:

dissolving corresponding metal compound of nanometer metal particle, and then mixing with assistant agent and reducing agent successively, to obtain nanometer metal particle collosol;

adding the nanometer metal particle collosol into polyvinylpyrrolidone, mixing and stirring for 8h to 24h to obtain nanometer metal particle blended collosol;

according to the stoichiometric ratio of the corresponding elements in the chemical formula of (Y_{1-x-y}EuₓGd_{y})BO₃, mixing yttrium salt, europium salt, gadolinium salt with boric acid or/and borate, where the amount of boric acid or/and borate exceeds 1% to 50% of stoichiometric ratio; adding alcoholic solution, after that, adding said nanometer metal particle blended collosol, heating under the temperature in the range of 75 to 90°C forming wet gel, then drying to obtain precursor; or, according to the stoichiometric ratio of the corresponding elements in the chemical formula of (Y_{1-x-y}EuₓGd_{y})BO₃, mixing yttrium salt, europium salt, gadolinium salt with boric acid, where the amount of boric acid exceeds 1% to 50% of stoichiometric ratio, adding alcoholic solution, after that, adding said nanometer metal particle blended collosol and combustion agent, stirring in the meanwhile, boiling to remove water, then turning on the ignition and burning to obtain precursor; wherein, 0<x≤0.3, 0≤y≤0.7;

pre-burning precursor, and then calcinating precursor, cooling, grinding to obtain said borate based red light emitting material.

In said borate based red light emitting material and preparation method thereof, the borate based red light emitting material is particulate fluorescent material having spherical or spherical-like structure, which comprising a core and shell, where the core is nanometer metal particle, and the shell is (Y_{1-x-y}EuₓGd_{y})BO₃. It makes the luminous intensity of the light emitting material high by taking Eu³⁺ as a luminous center, and the fluorescent material has the advantages of uniform particle size, structure stability, excellent luminous efficiency; the borate based red light emitting material is prepared by using wet chemical method or combustion coating method, that not only lower the temperature in the synthesis reaction, but also to improve the microstructure and macroscopic properties of the borate based red light emitting material, the obtained borate based red light emitting material have uniform particle size, the luminescent performances of the material is improved effectively. Also, the particle size of the borate based red light emitting material can be flexibly adjusted by controlling the metal nanometer particle diameter and the thickness of the fluorescent powder without the introduce of other impurities to obtain products of high quality. Meanwhile, the only requirement of the preparation method of the borate based red light emitting material is to control temperature and add reactants in an appropriate proportion, the products can be obtained. Thus, the preparation process is simple, low equipment requirements, no pollution, easy to control, suitable for industrial production.

### BRIEF DESCRIPTION OF THE DRAWINGS

Further description of the present invention will be illustrated, which combined with embodiments in the drawings:

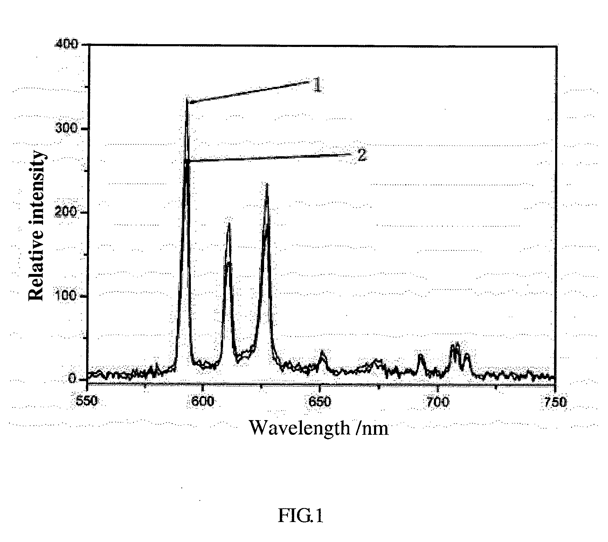

Fig.1 is an emission spectrum of borate based red light emitting material in Example 2 of the present invention with respect to (Y_{0.98}Eu_{0.02})BO₃ at an excitation wavelength of 172nm. Herein, curve 1 is the emission spectrum of the light emitting material (Y_{0.98}Eu_{0.02)}BO₃@Ag; curve 2 is the emission spectrum of the light emitting material (Y_{0.98}Eu_{0.02})BO₃.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a borate based red light emitting material comprising a core and a shell covering said core, wherein said core is nanometer metal particle, and said shell is fluorescent powder having chemical formula of (Y_{1-x-y}EuₓGd_{y})BO₃, wherein 0<x≤0.3, 0≤y≤0.7.

The chemical formula of said borate based red light emitting material can be expressed as: (Y_{1-x-y}EuₓGd_{y})BO₃@zM, wherein, @ stands for taking M as core, taking (Y_{1-x-y}EuₓGd_{y})BO₃ as shell, M is encapsulated in (Y_{1-x-y}EuₓGd_{y}) BO₃. Where, 0 <x≤0.3, x is preferably in the range of 0.005 to 0.20; 0≤y≤0.7, y is preferably in the range of 0.01 to 0.5; z is the molar ratio of M to (Y₁₋ₓ₋yEuₓGd_{y})BO₃, 0<z≤1×10⁻², z is preferably in the range of 1×10⁻⁴ to 2×10⁻³; M is nanometer metal particle, preferably at least one of nanometer Ag, Au, Pt, Pd particle.

Said shell covers the said core in layered form, said borate based red light emitting material has spherical or spherical-like particulate structure.

In said borate based red light emitting material, the borate based red light emitting material is particulate fluorescent material having spherical or spherical-like structure, which comprising a core and shell, where the core is nanometer metal particle, and the shell is (Y_{1-x-y}EuₓGd_{y})BO₃. The fluorescent material has the advantages of uniform particle size, structure stability, excellent luminous efficiency. It makes the luminous intensity of the light emitting material high by taking Eu³⁺ as a luminous center, the light emitting material show strong light emitting performance especially under the ultraviolet excitation at wavelength of 147 and 172nm. The light emitting material apply to plasma display panel and mercury-free fluorescent lamp, when match with 147 or 172nm that emitted by the radiation and discharge of Xe gas.

Moreover, the present invention provides a preparation method of said borate based red light emitting material, comprising:
dissolving corresponding metal compound of nanometer metal particle, and then mixing with assistant agent and reducing agent successively, to obtain nanometer metal particle collosol;
adding the nanometer metal particle collosol into the surface treatment agent polyvinylpyrrolidone, mixing and stirring for 8h to 24h to obtain nanometer metal particle blended collosol;
according to the stoichiometric ratio of the corresponding elements in the chemical formula of (Y_{1-x-y}EuₓGd_{y})BO₃, mixing yttrium salt, europium salt, gadolinium salt with boric acid or/and borate, where the amount of boric acid or/and borate exceeds 1% to 50% of stoichiometric ratio; adding alcoholic solution, after that, adding said nanometer metal particle blended collosol, heating under the temperature in the range of 75 to 90°C forming wet gel, then drying to obtain precursor; or, according to the stoichiometric ratio of the corresponding elements in the chemical formula of (Y_{1-x-y}EuₓGd_{y})BO₃, mixing yttrium salt, europium salt, gadolinium salt with boric acid, where the amount of boric acid exceeds 1% to 50% of stoichiometric ratio, adding alcoholic solution, after that, adding said nanometer metal particle blended collosol and combustion agent, stirring in the meanwhile, boiling to remove water, then turning on the ignition and burning to obtain precursor; wherein, 0<x≤0.3, 0≤y≤0.7;
pre-burning precursor, and then calcinating precursor, cooling, grinding to obtain said borate based red light emitting material.

A preferred method of making said nanometer metal particle collosol is:
1) weighing corresponding metal compound of nanometer metal particle and dissolving in solvent, to prepare metal salt solution, said metal compound is preferably at least one of silver nitrate, chloroauric acid, chloroplatinic acid, palladium chloride; said solvent is preferably but not limited to water and/or ethanol, because the only role of solvent is to dissolve the corresponding metal compound of nanometer metal particle, so any solvent can achieve this goal can be used;
2) under the condition of magnetic stirring, dissolving one or more assistant agent in said solution obtained from the 1) step, to make the content of assistant agent in the final nanometer metal particle collosol preferably in the range of 1.5×10⁻⁴g/mL to 2.1×10⁻³g/mL, said assistant agent is preferably at least one of polyvinylpyrrolidone, sodium citrate, cetyl trimethyl ammonium bromide, sodium dodecyl sulfate, sodium dodecyl sulfonate, the role of said assistant agent acts as a dispersant, which enables the solution obtained from the 1) step to form an uniform dispersion, preventing the final nanometer metal particle from agglomerating;
3) weighing reducing agent substance and dissolving in solvent, to prepare reducing agent solution, of which the concentration is in the preferred range of 1×10⁻³ mol/L to 1×10⁻²mol/L; said reducing agent is preferably at least one of hydrazine hydrate, ascorbic acid, sodium borohydride; said solvent is preferably water and/or ethanol;
4) under the condition of magnetic stirring, adding the reducing agent solution obtained from the 3) step into the solution obtained from the 2) step according to the molar ratio of reducing agent to metal ion, which is in the range of 1.2 to 4.8:1; reacting for 10 to 45min and then obtaining nanometer metal particle collosol.

A preferred method of making said nanometer metal particle collosol is: adding nanometer metal particle collosol into the surface treatment agent solution of polyvinylpyrrolidone (PVP), but not limited to PVP, the nanometer metal particle is subject to the surface treatment, stirring and reacting to obtain nanometer metal particle blended collosol containing nanometer metal particle. Herein, the content of the addition amount of PVP in nanometer metal particle blended collosol is preferably in the range of 0.001 g/mL to 0.01g/mL, PVP is provided for surface treatment of the metal nano-particles, the time of the surface treatment is preferably in the range of 8 to 24h, the objective of adding surface treatment agent is to improve the adsorption and deposition properties of nanometer metal particle, the objective of stirring and reacting is to make the surface of nanometer metal particle rough, which is beneficial to the adsorption and deposition of nanometer metal particle.

The method of making said precursor can be sol-gel coating method: that is, preferably, according to the stoichiometric ratio of the corresponding elements in the chemical formula of (Y_{1-x-y}EuₓGd_{y})BO₃, mixing yttrium salt, europium salt, gadolinium salt with boric acid or/and borate under the condition of magnetic stirring, where the amount of boric acid or/and borate exceeds 1% to 50% of stoichiometric ratio; adding alcoholic solution, after that, adding said nanometer metal particle blended collosol, heating under the temperature in the range of 75 to 90°C forming wet gel, then pre-drying in blast drying oven under the temperature in the range of 50 to 80°C preferably, after that, drying under the temperature in the range of 90 to 150°C, to obtain precursor. Herein, 0<x≤0.3, 0≤y≤0.7; yttrium salt is preferably at least one of Y (NO₃)₃, YCl₃; europium salt is preferably at least one of Eu (NO₃)₃, EuCl₃; gadolinium salt is preferably at least one of Gd (NO₃)₃, GdCl₃; borate is preferably but not limited to tributyl borate; alcoholic solution is an common alcoholic solution in the art, which is preferably ethanol; herein, water-bath heating is preferred for the temperature control; pre-drying can be natural drying, drying in the sun or other methods.

A preferred solution to the making of said precursor using said sol-gel coating method is: according to the stoichiometric ratio of the corresponding elements in the chemical formula of (Y_{1-x-y}EuₓGd_{y})BO₃, mixing yttrium salt, europium salt, gadolinium salt, boric acid with citric acid monohydrate, where the amount of boric acid exceeds 1% to 50% of stoichiometric ratio, and the molar ratio of citric acid monohydrate to total rare earth ions is 1 to 3: 1, complexing with metal particle; adding alcoholic solution, after that, adding said nanometer metal particle blended collosol, heating under the temperature in the range of 75 to 90°C forming wet gel; the pre-drying in blast drying oven at 60°C preferably, after that, drying at 100°C, to obtain precursor.

The method of making said precursor can be combustion coating method: that is, preferably, according to the stoichiometric ratio of the corresponding elements in the chemical formula of (Y_{1-x-y}EuₓGd_{y})BO₃, mixing yttrium salt, europium salt, gadolinium salt with boric acid, where the amount of boric acid exceeds 1% ~ 50% of stoichiometric ratio, adding alcoholic solution, after that, adding said nanometer metal particle blended collosol and combustion agent, stirring in the meanwhile, boiling to remove water, then turning on the ignition and burning to obtain precursor; wherein, 0<x≤0.3, 0≤y≤0.7; combustion agent is at least one of citric acid monohydrate, urea, glycine.

A preferred solution to the making of said precursor using said combustion coating method is: according to the stoichiometric ratio of the corresponding elements in the chemical formula of (Y_{1-x-y}EuₓGd_{y})BO₃, mixing yttrium salt, europium salt, gadolinium salt with boric acid, where the amount of boric acid exceeds 1% to 50% of stoichiometric ratio, adding alcoholic solution, after that, adding said nanometer metal particle blended collosol and combustion agent, where the molar ratio of combustion agent to total rare earth ions is in the range of 1 to 4:1; stirring in the meanwhile, boiling to remove water, then turning on the ignition and burning under the temperature in the preferred range of 300 to 600°C to obtain precursor.

Said pre-burning is preferably carried out under the temperature in the range of 500 to 1000°C for 3 to 8 hours by placing precursor into high temperature furnace; calcination is preferably carried out under the temperature in the range of 800 to 1300°C for 2 to 5 hours by placing the pre-burned precursor into box-type high-temperature furnace or tube furnace, the pre-burned can be grinded before being calcinated in high temperature furnace or tube furnace, this helps remove organics in precursor; after cooling and grinding the calcinated precursor, said borate based red light emitting material is obtained.

The borate based red light emitting material is prepared by using wet chemical method or combustion coating method, that not only lower the temperature in the synthesis reaction, but also to improve the microstructure and macroscopic properties of the borate based red light emitting material, the obtained borate based red light emitting material have uniform particle size, the luminescent properties of the material is improved effectively. Also, the particle size of the borate based red light emitting material can be flexibly adjusted by controlling the metal nanometer particle diameter and the thickness of the fluorescent powder without the introduction of other impurities to obtain products of high quality. Meanwhile, the only requirement of the preparation method of the borate based red light emitting material is to control temperature and add reactants in an appropriate proportion, the products can be obtained. Thus, the preparation process is simple, low equipment requirements, no pollution, easy to control, suitable for industrial production. When borate based red light emitting material is prepared by using combustion coating method, all the raw materials mix in the liquid phase at an atomic level, achieving uniform doping of the ions. And, the size of the particles can be controlled, the reaction run fast, the obtained fluorescent powder do not require ball milling and is in favor of the application of the product.

Special examples are disclosed as follows to demonstrate preparation method of borate based red light emitting material and the performance of it.

### Example 1

The preparation of a borate based red light emitting material having chemical formula of (Y_{0.495}Eu_{0.005}Gd_{0.5})BO₃@Au by using sol-gel coating method:

The preparation of nanometer Au particle is: weighing and dissolving 20.6mg of chloroauric acid (AuCl₃•HCl•4H₂O) in 16.8 mL of deionized water, after chloroauric acid dissolved completely, weighing and dissolving 14mg of sodium citrate and 6mg of cetyl trimethyl ammonium bromide in aqueous solution of chloroauric acid under the condition of magnetic stirring; weighing and dissolving 1.9mg of sodium borohydride and 17.6mg of ascorbic acid in 10mL of deionized water, respectively, obtaining 10mL of 5×10⁻³mol/L aqueous solution of sodium borohydride and 10mL of 1×10⁻²mol/L aqueous solution of ascorbic acid; under the condition of magnetic stirring, adding 0.08mL aqueous solution of sodium borohydride into aqueous solution of chloroauric acid, stirring and reacting for 5min, and then adding 3.12mL of 1×10⁻²mol/L aqueous solution of ascorbic acid into aqueous solution of chloroauric acid, continue to react for 30min, then obtaining 20mL of nanometer Au particle collosol containing 5×10⁻³mol/L of Au; taking 8mL of 5×10⁻³ mol/L nanometer Au particle collosol and adding 8mg of PVP, magnetic stirring for 8h. The surface-treated nanometer Au particle is obtained.

The preparation of (Y_{0.495}Eu_{0.005}Gd_{0.5})BO₃@Au is: placing 9.9mL of 0.2 mol/L Y(NO₃)₃ solution, 0.4ml of 0.05mol/L Eu(NO₃)₃ solution, 10ml of 0.2 mol/L Gd(NO₃)₃ solution and 0.2498g of H₃BO₃ into beaker, dissolving completely by stirring and dripping ethanol, then adding the surface-treated nanometer Au particle collosol obtained from the previous step forming mixed solution; dissolving 0.8406g of citric acid monohydrate (which is as much as the molar mass of metal ion) in ethanol, then adding into the mixed solution, placing and heating in a water-bath at 75°C, stirring to form wet gel; drying the wet gel in blast drying oven at 60°C for 12h, then drying completely at 110°C to obtain precursor; placing the precursor into high temperature furnace and pre-burning at 500°C for 2h, cooling to the room temperature, grinding, then placing into box-type high-temperature furnace, calcinating at 800°C for 5h, naturally cooling. The desired light emitting material (Y_{0.495}Eu_{0.005}Gd_{0.5})BO₃@Au is obtained.

### Example 2

The preparation of a borate based red light emitting material having chemical formula of (Y_{0.98}Eu_{0.02})BO₃@Ag by using sol-gel coating method:

The preparation of nanometer Ag particle is: weighing and dissolving 3.40mg of silver nitrate (AgNO₃) in 18.4 mL of deionized water, after silver nitrate dissolved completely, weighing and dissolving 42mg of sodium citrate in aqueous solution of silver nitrate under the condition of magnetic stirring; weighing and dissolving 5.7mg of sodium borohydride in 10mL of deionized water obtaining 1.5×10⁻²mol/L aqueous solution of sodium borohydride; under the condition of magnetic stirring, adding 1.6mL of 1.5×10⁻²mol/L aqueous solution of sodium borohydride into aqueous solution of silver nitrate at once, continue to react for 30min, then obtaining 20mL of nanometer Ag particle collosol containing 1×10⁻³mol/L of Ag; taking 2mL of 1×10⁻³mol/L nanometer Ag particle collosol and adding 4mg of PVP, magnetic stirring for 12h. The surface-treated nanometer Ag particle is obtained.

The preparation of (Y_{0.98}Eu_{0.02})BO₃@Ag is: placing 19.6mL of 0.2 mol/L Y(NO₃)₃ solution, 1.6ml of 0.05mol/L Eu(NO₃)₃ solution and 0.3710g of H₃BO₃ (amounts in exceed of 50mol%) into beaker, dissolving completely by stirring and dripping ethanol, then adding the surface-treated nanometer metal particle collosol obtained from the previous step forming mixed solution; dissolving 1.6811 g of citric acid monohydrate (which is 2 times as much as the molar mass of metal ion) in ethanol, then adding into the mixed solution, placing and heating in a water-bath at 90°C, stirring to form wet gel; drying the wet gel in blast drying oven at 60°C for 15h, then drying completely at 110°C to obtain precursor; placing the precursor into high temperature furnace and pre-burning at 700°C for 4h, cooling to the room temperature, grinding, then placing into box-type high-temperature furnace, calcinating at 1200°C for 2h, naturally cooling. The desired light emitting material (Y_{0.98}Eu_{0.02})BO₃@Ag is obtained. The no metal particle-coating light emitting material (Y_{0.98}Eu_{0.02})BO₃ is prepared using the same method.

Fig.1 is an emission spectrum of borate based red light emitting material in the embodiment of the present invention with respect to (Y_{0.9}Eu_{0.02})BO₃ at an excitation wavelength of 172nm. Herein, curve 1 is the emission spectrum of the light emitting material (Y_{0.98}Eu_{0.02})BO₃@Ag; curve 2 is the emission spectrum of the light emitting material (Y_{0.98}Eu_{0.02}). The luminous intensity of nanometer metal particle-covering material is 27% higher than that of no nanometer metal particle-covering material. The results show that the luminous intensity and luminous efficiency of borate based red light emitting material prepared in the embodiment of the present invention are high.

### Example 3

The preparation of a borate based red light emitting material having chemical formula of (Y_{0.5}Eu_{0.3}Gd_{0.2})BO₃@Pt by using sol-gel coating method:

The preparation of nanometer Pt particle is: weighing and dissolving 5.18mg of chloroplatinic acid (H₂PtCl₆•6H₂O) in 17 mL of ethanol solution, after chloroplatinic acid dissolved completely, weighing and dissolving 8mg of sodium citrate and 12mg of sodium dodecyl sulfonate in aqueous solution of chloroplatinic acid under the condition of magnetic stirring; weighing and dissolving 0.38mg of sodium borohydride in 10mL of deionized water obtaining 10mL of 1 × 10⁻³mol/L aqueous solution of sodium borohydride, preparing 10mL of 1×10⁻²mol/L hydrazine hydrate solution at the same time; under the condition of magnetic stirring, adding 0.4mL aqueous solution of sodium borohydride into aqueous solution of chloroplatinic acid, stirring and reacting for 5min, and then adding 2.6mL of 1×10⁻²mol/L hydrazine hydrate solution into aqueous solution of chloroplatinic acid, continue to react for 40min, then obtaining 20mL of nanometer Pt particle collosol containing 5×10⁻⁴mol/L of Pt; taking 16mL of 5×10⁻⁴mol/L nanometer Pt particle collosol and adding 32mg of PVP, magnetic stirring for 12h. The surface-treated nanometer Pt particle is obtained.

The preparation of (Y_{0.5}Eu_{0.3}Gd_{0.2})BO₃@Pt is: placing 10mL of 0.2 mol/L Y(NO₃)₃ solution, 24ml of 0.05mol/L Eu(NO₃)₃ solution, 4ml of 0.2 mol/L Gd(NO₃)₃ solution and 0.2968g of H₃BO₃ (amounts in exceed of 20mol%) into beaker, dissolving completely by stirring and dripping ethanol, then adding the surface-treated nanometer metal particle collosol obtained from the previous step forming mixed solution; dissolving 2.5217g of citric acid monohydrate (which is 3 times as much as the molar mass of metal ion) in ethanol, then adding into the mixed solution, placing and heating in a water-bath at 80°C, stirring to form wet gel; drying the wet gel in blast drying oven at 60°C for 10h, then drying completely at 110°C to obtain precursor; placing the precursor into high temperature furnace and pre-burning at 1000°C for 2h, cooling to the room temperature, grinding, then placing into tube furnace, calcinating at 1300°C for 2h, naturally cooling. The desired light emitting material (Y_{0.5}Eu_{0.3}Gd_{0.2})BO₃@Pt is obtained.

### Example 4

The preparation of a borate based red light emitting material having chemical formula of(Y_{0.25}Eu_{0.05}Gd_{0.7})BO₃@Pd by using sol-gel coating method:

The preparation of nanometer Pd particle is: weighing and dissolving 0.43mg of palladium chloride (PdCl₂•2H₂O) in 8.5 mL of deionized water, after palladium chloride dissolved completely, weighing and dissolving 11mg of sodium citrate and 4mg of sodium dodecyl sulfate in aqueous solution of palladium chloride under the condition of magnetic stirring; weighing and dissolving 3.8mg of sodium borohydride in 10mL of deionized water obtaining 1×10⁻²mol/L reducing aqueous solution of sodium borohydride; under the condition of magnetic stirring, adding rapidly 0.48mL of 1×10⁻²mol/L aqueous solution of sodium borohydride into aqueous solution of palladium chloride, continue to react for 20min, then obtaining 10mL of nanometer Pd particle collosol containing 1×10⁻⁴mol/L of Pd; taking 6mL of 1×10⁻⁴mol/L nanometer Pd particle collosol and adding 60mg of PVP, magnetic stirring for 8h. The surface-treated nanometer Pd particle is obtained.

The preparation of (Y_{0.25}Eu_{0.05}Gd_{0.7})BO₃@Pd is: placing 5mL of 0.2 mol/L Y(NO₃)₃ solution, 4ml of 0.05mol/L Eu(NO₃)₃ solution, 14ml of 0.2 mol/L Gd(NO₃)₃ solution and 0.9752g of tributyl borate (C₁₂H₂₇BO, amounts in exceed of 20mol%) into beaker, dissolving completely by stirring and dripping ethanol, then adding the surface-treated nanometer metal particle collosol obtained from the previous step, placing and heating in a water-bath at 85°C, stirring to form wet gel; drying the wet gel in blast drying oven at 50°C for 12h, then drying completely at 150°C to obtain precursor; placing the precursor into high temperature furnace and pre-burning at 500°C for 7h, cooling to the room temperature, grinding, then placing into tube furnace, calcinating at 900°C for 5h, naturally cooling. The desired light emitting material (Y_{0.25}Eu_{0.05}Gd_{0.7})BO₃@Pd is obtained.

### Example 5

The preparation of a borate based red light emitting material having chemical formula of(Y_{0.79}Eu_{0.20}Gd_{0.01})BO₃@Ag by using combustion coating method:

The preparation of nanometer Ag particle is: weighing and dissolving 3.40mg of silver nitrate (AgNO₃) in 18.4 mL of methanol solution, after silver nitrate dissolved completely, weighing and dissolving 42mg of sodium citrate in aqueous solution of silver nitrate under the condition of magnetic stirring; weighing and dissolving 5.7mg of sodium borohydride in 10mL of deionized water obtaining 10mL of 1.5×10⁻²mol/L aqueous solution of sodium borohydride; under the condition of magnetic stirring, adding 1.6mL of 1.5×10⁻²mol/L aqueous solution of sodium borohydride into aqueous solution of silver nitrate at once, continue to react for 10min, then obtaining 20mL of nanometer Ag particle collosol containing 1×10⁻³mol/L of Ag; taking 5mL of 1×10⁻³mol/L nanometer Ag particle collosol and adding 30mg of PVP, magnetic stirring for 24h. The surface-treated nanometer Ag particle is obtained.

The preparation of (Y_{0.79}Eu_{0.20}Gd_{0.01})BO₃@Ag is: placing 15.8mL of 0.2 mol/L Y(NO₃)₃ solution, 16ml of 0.05mol/L Eu(NO₃)₃ solution, 0.2ml of 0.2 mol/L Gd(NO₃)₃ solution and 0.2721g of boric acid (amounts in exceed of 20% according to stoichiometric ratio) into beaker, dissolving completely by stirring and dripping ethanol, then adding the surface-treated nanometer metal particle collosol obtained from the previous step forming mixed solution, dissolving 0.8406g of citric acid monohydrate (the molar ratio of citric acid monohydrate to total rare earth ions is 1) in ethanol, then adding into the mixed solution, stirring completely, then transferring to corundum crucible, heating over a resistance furnace, boiling to remove water forming sticky solution, then placing into muffle furnace (300°C) which is pre-heated, turning on the ignition, combusting completely in a few seconds, then obtaining fluffy white precursor; placing precursor into high temperature furnace and pre-burning at 500°C for 7h, cooling to the room temperature, then placing into box-type high-temperature furnace, calcinating at 800°C for 2h, naturally cooling. The desired light emitting material (Y_{0.79}Eu_{0.20}Gd_{0.01})BO₃@Ag is obtained.

### Example 6

The preparation of a borate based red light emitting material having chemical formula of (Y_{0.9}Eu_{0.05}Gd_{0.05})BO₃@Au by using combustion coating method:

The preparation of nanometer Au particle is: weighing and dissolving 20.6mg of chloroauric acid (AuCl₃•HCl•4H₂O) in 16.8 mL of deionized water, after chloroauric acid dissolved completely, weighing and dissolving 14mg of sodium citrate and 6mg of cetyl trimethyl ammonium bromide in aqueous solution of chloroauric acid under the condition of magnetic stirring; weighing and dissolving 1.9mg of sodium borohydride and 17.6mg of ascorbic acid in 10mL of deionized water, respectively, obtaining 10mL of 5×10⁻³mol/L aqueous solution of sodium borohydride and 10mL of 1×10⁻²mol/L aqueous solution of ascorbic acid; under the condition of magnetic stirring, adding 0.08mL aqueous solution of sodium borohydride into aqueous solution of chloroauric acid, stirring and reacting for 5min, and then adding 3.12mL of1×10⁻²mol/L aqueous solution of ascorbic acid into aqueous solution of chloroauric acid, continue to react for 30min, then obtaining 20mL of nanometer Au particle collosol containing 5×10⁻³mol/L of Au; taking 1mL of 5×10⁻³mol/L nanometer Au particle collosol and adding 3mg of PVP, magnetic stirring for 8h. The surface-treated nanometer Au particle is obtained.

The preparation of (Y_{0.9}Eu_{0.05}Gd_{0.05})BO₃@Au is: placing 18mL of 0.2 mol/L Y(NO₃)₃ solution, 4ml of 0.05mol/L Eu(NO₃)₃ solution, 1ml of 0.2 mol/L Gd(NO₃)₃ solution and 0.3710g of boric acid (amounts in exceed of 50% according to stoichiometric ratio) into beaker, dissolving completely by stirring and dripping ethanol, then adding the surface-treated nanometer metal particle collosol forming mixed solution, adding 0.7219g of urea (CO(NH₂)₂, the molar ratio of urea to total rare earth ions is 3) in into the mixed solution, stirring completely, then transferring to corundum crucible, heating over a resistance furnace, boiling to remove water forming sticky solution, then placing into muffle furnace (600°C) which is pre-heated, turning on the ignition, combusting completely in a few seconds, then obtaining fluffy white precursor; placing precursor into high temperature furnace and pre-burning at 600°C for 7h, cooling to the room temperature, then placing into tube furnace, calcinating at 1300°C for 2h, naturally cooling. The desired light emitting material (Y_{0.9}Eu_{0.05}Gd_{0.05})BO₃@Au is obtained.

### Example 7

The preparation of a borate based red light emitting material having chemical formula of (Y_{0.7}Eu_{0.1}Gd_{0.2})BO₃@Ag by using combustion coating method:

The preparation of nanometer Ag particle is: weighing and dissolving 3.40mg of silver nitrate (AgNO₃) in 18.4 mL of deionized water, after silver nitrate dissolved completely, weighing and dissolving 42mg of sodium citrate in aqueous solution of silver nitrate under the condition of magnetic stirring; weighing and dissolving 5.7mg of sodium borohydride in 10mL of deionized water obtaining 1.5×10⁻²mol/L aqueous solution of sodium borohydride; under the condition of magnetic stirring, adding 1.6mL of 1.5×10⁻²mol/L aqueous solution of sodium borohydride into aqueous solution of silver nitrate at once, continue to react for 30min, then obtaining 20mL of nanometer Ag particle collosol containing 1×10⁻³mol/L of Ag; taking 1mL of 1 × 10⁻³mol/L nanometer Ag particle collosol and adding 2mg of PVP, magnetic stirring for 12h. The surface-treated nanometer Ag particle is obtained.

The preparation of (Y_{0.7}Eu_{0.1}Gd_{0.2})BO₃@Ag is: placing 14mL of 0.2 mol/L Y(NO₃)₃ solution, 8ml of 0.05mol/L Eu(NO₃)₃ solution, 4ml of 0.2 mol/L Gd(NO₃)₃ solution and 0.2498g of boric acid (amounts in exceed of 1% according to stoichiometric ratio) into beaker, dissolving completely by stirring and dripping ethanol, then adding the surface-treated nanometer metal particle collosol forming mixed solution, adding 1.2012g of glycine (C₂H₅NO₂, the molar ratio of glycine to total rare earth ions is 4) in into the mixed solution, stirring completely, then transferring to corundum crucible, heating over a resistance furnace, boiling to remove water forming sticky solution, then placing into muffle furnace (500°C) which is pre-heated, turning on the ignition, combusting completely in a few seconds, then obtaining fluffy white precursor; placing precursor into high temperature furnace and pre-burning at 1000°C for 2h, cooling to the room temperature, then placing into tube furnace, calcinating at 1300°C for 2h, naturally cooling. The desired light emitting material (Y_{0.7}Eu_{0.1}Gd_{0.2})BO₃@Ag is obtained.

### Example 8

The preparation of a borate based red light emitting material having chemical formula of (Y_{0.9}Eu_{0.02}Gd_{0.08})BO₃@Pt by using combustion coating method:

The preparation of nanometer Pt particle is: weighing and dissolving 5.18mg of chloroplatinic acid (H₂PtCl₆•6H₂O) in 17 mL of propyl alcohol solution, after chloroplatinic acid dissolved completely, weighing and dissolving 8mg of sodium citrate and 12mg of sodium dodecyl sulfonate in aqueous solution of chloroplatinic acid under the condition of magnetic stirring; weighing and dissolving 0.38mg of sodium borohydride in 10mL of deionized water obtaining 10mL of 1 × 10⁻³mol/L aqueous solution of sodium borohydride, preparing 10mL of 1×10⁻² mol/L hydrazine hydrate solution at the same time; under the condition of magnetic stirring, adding 0.4mL aqueous solution of sodium borohydride into aqueous solution of chloroplatinic acid, stirring and reacting for 5min, and then adding 2.6mL of 1×10^{-2 2}mol/L hydrazine hydrate solution into aqueous solution of chloroplatinic acid, continue to react for 40min, then obtaining 20mL of nanometer Pt particle collosol containing 5×10⁻⁴mol/L of Pt; taking 4mL of 5×10⁻⁴mol/L nanometer Pt particle collosol and adding 16.0mg of PVP, magnetic stirring for 12h. The surface-treated nanometer Pt particle is obtained.

The preparation of (Y_{0.9}Eu_{0.02}Gd_{0.08})BO₃@Pt is: placing 18mL of 0.2 mol/L Y(NO₃)₃ solution, 1.6ml of 0.05mol/L Eu(NO₃)₃ solution, 1.6ml of 0.2 mol/L Gd(NO₃)₃ solution and 0.2844g of boric acid (amounts in exceed of 15% according to stoichiometric ratio) into beaker, dissolving completely by stirring and dripping ethanol, then adding the surface-treated nanometer metal particle collosol forming mixed solution, adding 0.9610g of urea (the molar ratio of urea to total rare earth ions is 4) in into the mixed solution, stirring completely, then transferring to corundum crucible, heating over a resistance furnace, boiling to remove water forming sticky solution, then placing into muffle furnace (400°C) which is pre-heated, turning on the ignition, combusting completely in a few seconds, then obtaining fluffy white precursor; placing precursor into high temperature furnace and pre-burning at 700°C for 5h, cooling to the room temperature, then placing into box-type high-temperature furnace, calcinating at 900°C for 5h, naturally cooling. The desired light emitting material is obtained.

### Example 9

The preparation of a borate based red light emitting material having chemical formula of (Y_{0.5}Eu_{0.3}Gd_{0.2})BO₃@Pt/Au by using sol-gel coating method:

The preparation of nanometer Pt/Au particle is: weighing and dissolving 6.2mg of chloroauric acid (AuCl₃•HCl•4H₂O) and 7.8mg of chloroplatinic acid (H₂PtCl₆•6H₂O) in 28mL of deionized water, after dissolved completely, weighing and dissolving 22mg of sodium citrate and 20mg of PVP in the mixed solution under the condition of magnetic stirring; weighing and dissolving 5.7mg of sodium borohydride 10mL of deionized water, obtaining 10mL of 1.5×10⁻²mol/L aqueous solution of sodium borohydride; under the condition of magnetic stirring, adding 2mL of 1.5 × 10⁻² mol/L aqueous solution of sodium borohydride into the mixed solution at once, continue to react for 20min, then obtaining 30mL of nanometer Pt/Au particle collosol containing 1×10⁻³ mol/L of total metal particle; taking 5mL of nanometer Pt/Au particle collosol and adding 20mg of PVP, magnetic stirring for 6h. The surface-treated nanometer Pt/Au particle is obtained.

The preparation of (Y_{0.5}Eu_{0.3}Gd_{0.2})BO₃@Pt/Au is: placing 10mL of 0.2 mol/L YCl₃ solution, 24ml of 0.05mol/L EuCl₃ solution, 4ml of 0.2 mol/L GdCl₃ solution and 0.2968g of H₃BO₃ (amounts in exceed of 20mol%) into beaker, dissolving completely by stirring and dripping ethanol, then adding the surface-treated nanometer metal particle collosol obtained from the previous step forming mixed solution; dissolving 2.5217g of citric acid monohydrate (which is 3 times as much as the molar mass of metal ion) in ethanol, then adding into the mixed solution, placing and heating in a water-bath at 80°C, stirring to form wet gel; drying the wet gel in blast drying oven at 80°C for 10h, then drying completely at 90°C to obtain precursor; placing the precursor into high temperature furnace and pre-burning at 1000°C for 2h, cooling to the room temperature, grinding, then placing into tube furnace, calcinating at 1300°C for 2h, naturally cooling. The desired light emitting material (Y_{0.5}Eu_{0.3}Gd_{0.2})BO₃@Pt/Au is obtained.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the scope of the present invention. Accordingly, the scope of the present invention is described by the appended claims and is supported by the foregoing description.

## Claims

1. A borate based red light emitting material comprising a core and a shell covering said core, wherein said core is nanometer metal particle, and said shell is fluorescent powder having chemical formula of (Y_{1-x-y}EuₓGd_{y})BO₃, wherein 0< x≤0.3, 0≤y≤0.7.

2. The borate based red light emitting material according to claim 1, wherein the molar ratio of said core to shell is larger than 0, less than or equal to 1×10⁻²; said nanometer metal particle is at least one of Ag, Au, Pt, Pd.

3. The borate based red light emitting material according to claim 1, wherein said shell covers said core in layered form, said borate based red light emitting material has spherical or spherical-like particulate structure; the molar ratio of said core to shell is in the range of 1×10⁻⁴ to 2×10⁻³; said x is in the range of 0.005 to 0.20, said y is in the range of 0.01 to 0.5.

4. A preparation method of borate based red light emitting material, comprising:
dissolving corresponding metal compound of nanometer metal particle, and then mixing with assistant agent and reducing agent successively, to obtain nanometer metal particle collosol;
adding the nanometer metal particle collosol into polyvinylpyrrolidone, mixing and stirring for 8h to 24h to obtain nanometer metal particle blended collosol;
according to the stoichiometric ratio of the corresponding elements in the chemical formula of (Y₁₋ₓ₋yEuₓGd_{y})BO₃, mixing yttrium salt, europium salt, gadolinium salt with boric acid or/and borate, where the amount of boric acid or/and borate exceeds 1% to 50% of said stoichiometric ratio; adding alcoholic solution, after that, adding said nanometer metal particle blended collosol, heating under the temperature in the range of 75 to 90°C forming wet gel, then drying to obtain precursor; or,
according to the stoichiometric ratio of the corresponding elements in the chemical formula of (Y_{1-x-y}EuₓGd_{y})BO₃, mixing yttrium salt, europium salt, gadolinium salt with boric acid, where the amount of boric acid exceeds 1% to 50% of stoichiometric ratio, adding alcoholic solution, after that, adding said nanometer metal particle blended collosol and combustion agent, stirring in the meanwhile, boiling to remove water, then turning on the ignition and burning to obtain precursor;
wherein, 0<x≤0.3, 0≤y≤0.7;
pre-burning precursor, and then calcinating precursor, cooling, grinding to obtain said borate based red light emitting material.

5. The preparation method of borate based red light emitting material according to claim 4, wherein, in the step of making said nanometer metal particle collosol, the corresponding metal compound of nanometer metal particle is at least one of silver nitrate, chloroauric acid, chloroplatinic acid, palladium chloride; said assistant agent is at least one of polyvinylpyrrolidone, sodium citrate, cetyl trimethyl ammonium bromide, sodium dodecyl sulfate, sodium dodecyl sulfonate, the concentration of assistant agent in nanometer metal particle collosol is in the range of 1.5×10-⁴ g/mL to 2.1×10⁻³ g/mL; said reducing agent is at least one of hydrazine hydrate, ascorbic acid, sodium borohydride, the molar ratio of reducing agent to metal ions in nanometer metal particle collosol is in the range of 1.2 to 4.8:1.

6. The preparation method of borate based red light emitting material according to claim 4, wherein, in the step of making said nanometer metal particle blended collosol, the concentration of polyvinylpyrrolidone in said nanometer metal particle blended collosol is in the range of 0.001 g/mL to 0.01g/mL.

7. The preparation method of borate based red light emitting material according to claim 4, wherein,
the method of making said precursor is: according to the stoichiometric ratio of the corresponding elements in the chemical formula of (Y_{1-x-y}EuₓGd_{y})BO₃, mixing yttrium salt, europium salt, gadolinium salt, boric acid with citric acid monohydrate, where the amount of boric acid exceeds 1% to 50% of stoichiometric ratio, and the molar ratio of citric acid monohydrate to total rare earth ions is in the range of 1 to 3:1; adding alcoholic solution, after that, adding said nanometer metal particle blended collosol, heating under the temperature in the range of 75 to 90°C forming wet gel, then drying to obtain precursor; or,
according to the stoichiometric ratio of the corresponding elements in the chemical formula of (Y_{1-x-y}EuₓGd_{y})BO₃, mixing yttrium salt, europium salt, gadolinium salt with boric acid, where the amount of boric acid exceeds 1% to 50% of stoichiometric ratio, adding alcoholic solution, after that, adding said nanometer metal particle blended collosol and combustion agent, where the molar ratio of combustion agent to total rare earth ions is in the range of 1 to 4:1; stirring in the meanwhile, boiling to remove water, then turning on the ignition and burning under the temperature in the range of 300 to 600°C to obtain precursor;
wherein, 0<x≤0.3, 0≤y≤0.7.

8. The preparation method of borate based red light emitting material according to claim 4 or 7, wherein, in the step of making said precursor, said yttrium salt is at least one of Y (NO₃)₃, YCl₃; said europium salt is at least one of Eu (NO₃)₃, EuCl₃; said gadolinium salt is at least one of Gd (NO₃)₃, GdCl₃; said borate is tributyl borate.

9. The preparation method of borate based red light emitting material according to claim 4 or 7, wherein, in the step of making said precursor, said combustion agent is at least one of citric acid monohydrate, urea, glycine.

10. The preparation method of borate based red light emitting material according to claim 4, said pre-burning is carried out under the temperature in the range of 500 to 1000°C for 3 to 8 hours; said calcination is carried out under the temperature in the range of 800 to 1300°C for 2 to 5 hours.

## Patentansprüche

1. Boratbasiertes, Rotlicht-emittierendes Material, umfassend einen Kern und eine diesen Kern bedeckende Hülle, wobei der Kern ein Nanometermetallpartikel ist und die Hülle Fluoreszenzpulver mit der chemischen Formel (Y_{1-x-y}EuₓGd_{y})BO₃ ist, wobei 0<x≤0,3, 0≤y≤0,7 ist.

2. Boratbasiertes, Rotlicht-emittierendes Material nach Anspruch 1, wobei das Molverhältnis des Kerns zur Hülle größer als 0, kleiner oder gleich 1×10⁻² ist; wobei der Nanometermetallpartikel zumindest eines von Ag, Au, Pt, Pd ist.

3. Boratbasiertes, Rotlicht-emittierendes Material nach Anspruch 1, wobei die Hülle den Kern in Schichtform bedeckt, wobei das boratbasierte, Rotlicht-emittierende Material eine kugelförmige oder kugelähnliche Teilchenstruktur aufweist; wobei das Molverhältnis der Kerns zur Hülle im Bereich von 1×10⁻⁴ bis 2×10⁻³ liegt; wobei x im Bereich von 0,005 bis 0,20 und y im Bereich von 0,01 bis 0,5 liegt.

4. Verfahren zur Herstellung eines boratbasierten, Rotlicht-emittierenden Materials, umfassend:
Lösen einer entsprechenden Metallverbindung von Nanometermetallpartikel und dann Mischen mit einem Hilfsstoff und anschließendes Reduzieren des Stoffs, um ein Nanometermetallpartikelkolloid zu erhalten;
Hinzufügen des Nanometermetallpartikelkolloids zu Polyvinylpyrrolidon, Mischen und Rühren 8 bis 24 h lang, um Nanometermetallpartikelmischungskolloid zu erhalten;
Mischen von Yttriumsalz, Europiumsalz, Gadoliniumsalz mit Borsäure und/oder Borat gemäß dem stöchiometrischen Verhältnis der jeweiligen Elemente in der chemischen Formel von (Y_{1-x-y}EuₓGd_{y})BO₃, wobei die Menge von Borsäure und/oder Borat 1 % bis 50 % des stöchiometrischen Verhältnisses übersteigt; Hinzufügen von Alkohollösung, anschließend Hinzufügen des Nanometermetallpartikelmischungskolloids, Erhitzen bei einer Temperatur im Bereich von 75 bis 90 °C, wobei nasses Gel ausgebildet wird, und dann Trocknen, um einen Vorläufer zu erhalten; oder
Mischen von Yttriumsalz, Europiumsalz, Gadoliniumsalz mit Borsäure gemäß dem stöchiometrischen Verhältnis der jeweiligen Elemente in der chemischen Formel von (Y₁₋ₓ₋yEuₓGd_{y})BO₃, wobei die Menge von Borsäure 1 % bis 50 % des stöchiometrischen Verhältnisses übersteigt; Hinzufügen von alkoholischer Lösung, anschließend Hinzufügen des Nanometermetallpartikelmischungskolloids und von einem Verbrennungsmittel bei gleichzeitigem Rühren, Sieden zur Entfernung von Wasser, dann Einschalten der Zündung und Verbrennen, um einen Vorläufer zu erhalten;
wobei 0<x≤0,3, 0≤y≤0,7 ist;
Vorverbrennen des Vorläufers und dann Kalzinieren des Vorläufers, Abkühlen, Mahlen, um das boratbasierte Rotlicht-emittierende Material zu erhalten.

5. Verfahren zur Herstellung eines boratbasierten, Rotlicht-emittierenden Materials nach Anspruch 4, wobei beim Schritt des Herstellens des Nanometermetallpartikelkolloids die entsprechende Metallverbindung des Nanometermetallpartikels zumindest eines von Silbernitrat, Chlorgoldsäure, Chlorplatinsäure, Palladiumchlorid ist; wobei der Hilfsstoff zumindest eines von Polyvinylpyrrolidon, Natriumcitrat, Cetyltrimethylammoniumbromid, Natriumdodecylsulfat, Natriumdodecylsulfonat ist, wobei die Konzentration des Hilfsstoffs in einem Nanometermetallpartikelkolloid im Bereich von 1.5×10⁻⁴ g/ml bis 2.1 × 10⁻³ g/ml liegt; wobei das Reduktionsmittel zumindest eines von Hydrazinhydrat, Ascorbinsäure, Natriumborhydrid ist, wobei das Molverhältnis vom Reduktionsmittel zu Metallionen im Nanometermetallpartikelkolloid im Bereich von 1,2 bis 4,8:1 beträgt.

6. Verfahren zur Herstellung eines boratbasierten, Rotlicht-emittierenden Materials nach Anspruch 4, wobei im Schritt des Herstellens des Nanometermetallpartikelmischungkolloids die Konzentration des Polyvinylpyrrolidons im Nanometermetallpartikelmischungkolloid im Bereich von 0,001 g/ml bis 0,01 g/ml liegt.

7. Verfahren zur Herstellung eines boratbasierten, Rotlicht-emittierenden Materials nach Anspruch 4, wobei das Verfahren zur Herstellung des Vorläufers wie folgt ist:
Mischen von Yttriumsalz, Europiumsalz, Gadoliniumsalz und Borsäure gemäß dem stöchiometrischen Verhältnis der jeweiligen Elemente in der chemischen Formel von (Y_{1-x-y}EuₓGd_{y})BO₃ mit Zitronsäuremonohydrat, wobei die Menge von Borsäure 1 % bis 50 % des stöchiometrischen Verhältnisses übersteigt und das Molverhältnis des Zitronensäuremonohydrats zu Gesamtseltenerdionen im Bereich von 1 zu 3:1 liegt; Hinzufügen von alkoholischer Lösung, anschließend Hinzufügen des Nanometermetallpartikelmischungskolloids, Erhitzen bei einer Temperatur im Bereich von 75 bis 90 °C, wobei nasses Gel ausgebildet wird, und dann Trocknen, um einen Vorläufer zu erhalten; oder
Mischen von Yttriumsalz, Europiumsalz, Gadoliniumsalz mit Borsäure gemäß dem stöchiometrischen Verhältnis der jeweiligen Elemente in der chemischen Formel von (Y_{1-x-y}EuₓGd_{y})BO₃, wobei die Menge von Borsäure 1 % bis 50 % des stöchiometrischen Verhältnisses übersteigt; Hinzufügen von alkoholischer Lösung, anschließend Hinzufügen des Nanometermetallpartikelmischungskolloids und von einem Verbrennungsmittel bei gleichzeitigem Rühren, wobei das Molverhältnis des Verbrennungsmittels zu Gesamtseltenerdionen im Bereich von 1 bis 4:1 liegt; Sieden zur Entfernung von Wasser, dann Einschalten der Zündung und Verbrennen bei einer Temperatur im Bereich von 300 bis 600 °C, um einen Vorläufer zu erhalten;
wobei 0<x≤0,3, 0≤y≤0,7 ist.

8. Verfahren zur Herstellung eines boratbasierten, Rotlicht-emittierenden Materials nach Anspruch 4 oder 7, wobei beim Schritt des Herstellens des Vorläufers das Yttriumsalz zumindest eines von Y(NO₃)₃, YCl₃ ist; das Europiumsalz zumindest eines von Eu(NO₃)₃, EuCl₃ ist; das Gadoliniumsalz zumindest eines von Gd(NO₃)₃, GdCl₃ ist; das Borat Tributylborat ist.

9. Verfahren zur Herstellung eines boratbasierten, Rotlicht-emittierenden Materials nach Anspruch 4 oder 7, wobei beim Schritt des Herstellens des Vorläufers das Verbrennungsmittel zumindest eines von Zitronensäuremonohydrat, Harnstoff, Glycin ist.

10. Verfahren zur Herstellung eines boratbasierten, Rotlicht-emittierenden Materials nach Anspruch 4, wobei das Vorverbrennen bei einer Temperatur im Bereich von 500 bis 1000 °C 3 bis 8 Stunden lang durchgeführt wird; wobei die Kalzinierung bei einer Temperatur im Bereich von 800 bis 1300 °C 2 bis 5 Stunden lang durchgeführt wird.

## Revendications

1. Matériau d'émission de lumière rouge à base de borate comprenant un noyau et une coque couvrant ledit noyau, où ledit noyau est une particule métallique nanométrique, et ladite coque est une poudre fluorescente ayant la formule chimique de (Y_{-1-x-y}EuₓGd) BO₃ où 0<x≤0,3, 0≤y≤0,7.

2. Matériau d'émission de lumière rouge à base de borate selon la revendication 1, dans lequel le rapport molaire dudit noyau à ladite coque est plus grand que 0, inférieur ou égal à 1x10⁻² ; ladite particule métallique nanométrique est au moins une de Ag, Au, Pt, Pd.

3. Matériau d'émission de lumière rouge à base de borate selon la revendication 1, dans lequel ladite coque couvre ledit noyau sous une forme en couche, ledit matériau d'émission de lumière rouge à base de borate possède une structure particulaire sphérique ou semblable à une structure sphérique, le rapport molaire dudit noyau à la coque est dans la plage de 1x10⁻⁴ à 2x10⁻³ ; ledit x est dans la plage de 0,005 à 0,20, ledit y est dans la plage de 0,01 à 0,5.

4. Procédé de préparation d'un matériau d'émission de lumière rouge à base de borate, comprenant :
dissoudre un composé métallique correspondant d'une particule métallique nanométrique, et mélanger ensuite avec un agent assistant et un agent de réduction successivement, pour obtenir un collosol de particule métallique nanométrique ;
ajouter le collosol de particule métallique nanométrique dans du polyvinyl-pyrrolidone, mélanger et agiter pendant 8h à 24h pour obtenir un collosol mélangé de particules métalliques nanométriques ;
en accord avec le rapport stoechiométrique des éléments correspondants dans la formule chimique de (Y_{-1-x-y}EuₓG_{d}) BO₃ mélanger du sel d'yttrium, sel d'europium, sel de gadolinium avec de l'acide borique ou/et le borate, où la quantité d'acide borique et/ou borate dépasse 1% à 50% dudit rapport stoechiométrique ; ajouter une solution alcoolique, après cela, ajouter ledit collosol mélangé de particule métallique nanométrique, chauffer sous la température dans la plage de 75 à 90 °C en formant un gel humide, ensuite sécher pour obtenir le précurseur ; ou
en accord avec le rapport stoechiométrique des éléments correspondants dans la formule chimique de (Y_{-1-x-y}EuₓG_{d}) BO₃ mélanger du sel d'yttrium, sel d'europium, sel de gadolinium avec l'acide borique, où la quantité d'acide borique dépasse 1% à 50% du rapport stoechiométrique, ajouter une solution alcoolique, après cela, ajouter ledit collosol mélangé de particules métalliques nanométriques et un agent de combustion, agiter entre-temps, faire bouillir pour supprimer de l'eau, ensuite procéder à l'allumage et à la combustion pour obtenir un précurseur ;
où 0<x≤0,3, 0≤y≤0,7.
soumettre à une précombustion le précurseur, et ensuite calciner le précurseur, refroidir, meuler pour obtenir ledit matériau d'émission de lumière rouge à base de borate.

5. Procédé de préparation d'un matériau d'émission de lumière rouge à base de borate selon la revendication 4, dans lequel, à l'étape de réalisation dudit collosol de particules métalliques nanométriques, le composé métallique correspondant de la particule métallique nanométrique est au moins un parmi le nitrate d'argent, l'acide chloroaurique, l'acide chloroplatinique, le chlorure de palladium ; ledit agent assistant est au moins un de polyvinylpyrrolidone, citrate de sodium, cétyl triméthyl ammonium bromure, sodium dodécyl sulfate, sodium dodécyl sulfonate, la concentration de l'agent assistant dans le collosol de particules métalliques nanométriques est dans la plage de 1,5x10⁻⁴ g/mL à 2,1x10⁻³ g/mL; ledit agent de réduction est au moins un par l'hydrate d'hydrazine, l'acide ascorbique, le sodium borohydrure, le rapport molaire de l'agent de réduction aux ions métalliques dans le collosol de particules métalliques nanométriques est dans la plage de 1,2 à 4,8:1.

6. Procédé de préparation d'un matériau d'émission de lumière rouge à base de borate selon la revendication 4, dans lequel, à l'étape de préparation dudit collosol mélangé de particules métalliques nanométriques, la concentation du polyvinylpyrrolidone dans ledit collosol mélangé de particules métalliques nanométriques est dans la plage de 0,001 g/mL à 0,01 g/mL.

7. Procédé de préparation d'un matériau d'émission de lumière rouge à base de borate selon la revendication 4, dans lequel
le procédé de préparation dudit précurseur est : en accord avec le rapport stoechiométrique des éléments correspondants dans la formule chimique de (Y_{-1-x-y}EuₓG_{d}) BO₃ mélanger le sel d'yttrium, le sel d'europium, le sel de gadolinium, l'acide borique avec le monohydrate d'acide citrique, où la quantité d'acide borique dépasse 1% à 50% du rapport stoechiométrique, et le rapport molaire du monohydrate d'acide citrique aux ions de terres rares au total est dans la plage de 1 à 3 :1 ; ajouter une solution alcoolique, après cela, ajouter ledit collosol mélangé de particules métalliques nanométriques, chauffer sous la température dans la plage de 75 à 90 °C en formant un gel humide, ensuite sécher pour obtenir un précurseur ; ou
en accord avec le rapport stoechiométrique des éléments correspondants dans la formule chimique de (Y_{-1-x-y}EuₓGd) BO₃ mélanger du sel d'yttrium, sel d'europium, sel de gadolinium avec l'acide borique, où la quantité d'acide borique dépasse 1% à 50% du rapport stoechiométrique, ajouter une solution alcoolique, après cela ajouter ledit collosol mélangé de particules métalliques nanométriques et l'agent de combustion, où le rapport molaire de l'agent de combustion aux ions de terres rares au total est dans la plage de 1 à 4:1 ; agiter entre-temps, faire bouillir pour supprimer de l'eau, ensuite procéder à l'allumage et à la combustion sous la température dans la plage de 300 à 600 °C pour obtenir le précurseur ;
où, 0<x≤0,3, 0≤y≤0,7.

8. Procédé de préparation du matériau d'émission de lumière rouge à base de borate selon la revendication 4 ou 7, dans lequel, à l'étape de préparation dudit précurseur, ledit sel de yttrium est au moins un de Y (NO₃)₃, YCl₃ ; ledit sel d'europium est au moins un de Eu (NO₃)₃, EuCl₃ ; ledit sel de gadolinium est au moins un de Gd (NO₃)₃, GdCl₃ ; ledit borate est le tributyl borate.

9. Procédé de préparation du matériau d'émission de lumière rouge à base de borate selon la revendication 4 ou 7, dans lequel, à l'étape de préparation dudit précurseur, ledit agent de combustion est au moins un parmi le monohydrate d'acide citrique, l'urée, la glycine.

10. Procédé de préparation du matériau d'émission de lumière rouge à base de borate selon la revendication 4, ladite précombustion est exécutée sous la température dans le plage de 500 à 1000°C pendant 3 à 8 heures ; ladite calcination est exécutée sous la température dans le plage de 800 à 1300 °C pendant 2 à 5 heures.
